# EUROPÄISCHE PATENTSCHRIFT

(11) **EP 1 445 160 B1**
(45) Veröffentlichungstag und Bekanntmachung des Hinweises auf die Patenterteilung: **03.10.2012**
(21) Anmeldenummer: 04002421.8
(22) Anmeldetag: 04.02.2004
(51) Int. Cl.: B60S 3/04

(54) **Waschverfahren und Fahrzeugwaschanlage**
Washing method and car wash installation
Procédé et installation de lavage pour vehicules

(30) Priorität: 06.02.2003 DE 20301843 U
(43) Veröffentlichungstag der Anmeldung: 11.08.2004
(73) Patentinhaber: Otto Christ AG, 87734 Benningen (DE)
(72) Erfinder: Christ, Franz, 87700 Memmingen (DE)
(74) Vertreter: Ernicke, Hans-Dieter

(56) Entgegenhaltungen:
- DE-A1- 1 680 837
- US-A- 3 594 843
- US-A- 4 711 257
- US-A- 5 033 490
- US-A1- 2002 112 745
- US-A1- 2003 111 099
- PATENT ABSTRACTS OF JAPAN Bd. 1997, Nr. 06, 30. Juni 1997 (1997-06-30) -& JP 09 039746 A (NISSEI BUILD KOGYO CO LTD), 10. Februar 1997 (1997-02-10)
- PATENT ABSTRACTS OF JAPAN Bd. 1996, Nr. 12, 26. Dezember 1996 (1996-12-26) -& JP 08 198198 A (SHIMADZU CORP), 6. August 1996 (1996-08-06)
- PATENT ABSTRACTS OF JAPAN Bd. 1997, Nr. 01, 31. Januar 1997 (1997-01-31) -& JP 08 226243 A (NISSEI BUILD KOGYO CO LTD), 3. September 1996 (1996-09-03)

## Beschreibung

Die Erfindung betrifft ein Verfahren zum Waschen von Fahrzeugen und eine Fahrzeugwaschanlage mit den Merkmalen im Oberbegriff des Verfahrens- und Vorrichtungshauptanspruchs.

Aus der DE-A 23 20 925 ist eine Fahrzeugwaschanlage in Form einer Portalwaschanlage mit einem einzelnen fahrbaren Waschportal bekannt. Das Waschportal weist eine Wasch- und Trockeneinrichtung und zusätzlich eine ausfahrbare Sprüheinrichtung zum Auftragen einer Wasch- und/oder Konservierungslösung auf dem Fahrzeug auf. Diese Chemikalien werden vom stehenden Portal aus in der Art eines Gießvorgangs mittels einer einzelnen zentralen Düse aufgebracht, die an einem mehrgelenkigen Schwenkarm angebracht ist, der nach Art eines Parallelogrammlenkers ausgebildet ist und dadurch eine geradlinige Düsenbewegung mittig und über die gesamte Fahrzeuglänge ausführt. Bevorzugt beginnt der Auftrag des Reinigungsmittels am Fahrzeugende bei voll ausgefahrener Düse, die dann zum Waschportal hin bewegt wird. Durch den Mittelauftrag vom stehenden Portal aus und vor Beginn der eigentlichen mechanischen Fahrzeugwäsche soll eine ausreichende Einwirkzeit erreicht werden. In einer alternativen Ausführungsform ist eine schwenkbare Düse am Querhaupt des Waschportals angebracht, die in Folge ihrer Schwenkbewegung und bei ausreichendem Versorgungsdruck eine Bewegung des Sprühstrahls über die gesamte Fahrzeuglänge ermöglichen soll. Die bekannte Sprüheinrichtung ist nur für flüssige Medien geeignet. Die Benetzung der gesamten Fahrzeugoberfläche aus einer einzelnen Düse erfordert einen Gießvorgang, der wiederum einen Medienauftrag im Überschuss verlangt, was hohe Kosten verursacht und zu Recyclingproblemen führt. Durch die mittige Düsenanordnung ist die Benetzung der Fahrzeugseitenflächen außerdem unzureichend. Durch den Flüssigkeitsauftrag vom stehenden Portal aus ergibt sich ferner eine wesentliche Verzögerung der mechanischen Fahrzeugwäsche und außerdem eine zu lange Einwirkzeit, die vor allem bei aggressiven Reinigungsmitteln zu Problemen mit dem Fahrzeuglack führen kann. Die Probleme werden durch den Umstand verschärft, dass der Mittelauftrag am Fahrzeugende und damit an der vom Waschportal am weitesten entfernten Stelle beginnt, die von der Wascheinrichtung erst sehr spät erreicht wird.

Die US 3,594,843 A zeigt eine Autowaschanlage, bei der das Reinigungsmittel mit Sprühdüsen auf das Fahrzeug aufgebracht wird. Die Sprühdüsen sind fest am Portal montiert und befinden sich in einem festen Abstand vor der Portalfront.

Aus der EP 0 309 004 A2 ist eine Portalwaschanlage bekannt, die mit zwei getrennt und hintereinander verfahrbaren Portalen ausgerüstet ist. Das in Bewegungsrichtung vorauseilende erste Portal ist als kombiniertes Trocken- und Schaumportal ausgeführt. Das zweite Portal ist das eigentliche Waschportal, das mit Waschbürsten, einer Hochdruckwascheinrichtung etc. ausgestattet ist. Das Schaumportal soll zur Erzielung einer ausreichend langen Einwirkzeit für den Reinigungsschaum dem Waschportal ein Stück voraus fahren und das Fahrzeug einschäumen, wobei die nachfolgende mechanischen Fahrzeugwäsche mit zeitlicher Verzögerung durch das im Abstand folgende Waschportal ausgeführt wird. Diese Variante verbessert zwar die Einwirkbedingungen für den Reinigungsschaum, bedingt aber einen erheblich größeren Bau-, Platz- und Kostenaufwand als ein Einzelportal. In vielen Fällen reicht die Hallenlänge auch zur Unterbringung einer solchen Doppelportalanlage nicht aus.

Die US 2002/0112745 A1 befasst sich mit einer Hochdruckwaschanlage amerikanischer Bauart, bei der aus zwei L-förmigen Hochdruck-Waschbögen Waschflüssigkeit auf das Fahrzeug gespritzt wird. Die beiden Waschbögen sind an einem Trolley drehbar gelagert, der an aufgeständerten Schienen längsverfahrbar ist. Auf diese Weise können die Hochdruck-Waschbögen rund um das Fahrzeug bewegt werden und können das Fahrzeug allseitig einspritzen.

Die DE 16 80 837 A1 lehrt eine Waschanlage mit einem schwenkbaren Sprühbogen, der mit einem Rollwagen aus der Mittellage gegenüber dem Fahrzeug ein Stück vor und zurück verfahren werden kann. Der Bogen ist als Hochdruckbogen ausgebildete, aus dessen Düsen Waschwasser, Seifenlösung, Reinigungsmittel, Trockenluft und dergleichen auf das Fahrzeug gesprüht werden.

Aus der US 4,711,257 A ist eine Waschanlage mit einem teleskopierbaren Gehäuse bekannt. Innerhalb des Gehäuses sind an aufgeständerten Schienen mehrere Sprührohre mittels Laufwagen verfahrbar gelagert. Die Sprührohre dienen zum Auftrag unterschiedlicher Flüssigkeiten auf das Fahrzeug. Während der Überläufe über das Fahrzeug bewegen sich die Sprührohre stets alle gemeinsam und mit einem gleichbleibendem engen Abstand. Der Reinigungsmittelauftrag und die Hochdruckwäsche finden dabei in getrennten Überläufen statt.

Die JP 09 039746 A offenbart einen höhenverstellbaren Horizontalbalken, an dem eine Trockendüse, ein Düsenrohr für Wasser und ein Düsenrohr für Wachs starr angeordnet sind. Der Horizontalbalken kann während der Überfahrbewegung über das Fahrzeug um eine Horizontalachse geschwenkt und konturenabhängig im passenden Winkel gegen das Fahrzeug gerichtet werden.

In der JP 08 198198 A ist eine Waschanlage für Flugzeuge angesprochen, bei der an einem Portal mehrere Gelenkarmroboter mit Wascheinrichtungen angeordnet sind.

Die JP 08 226243 A zeigt einen Carport mit einem darin angeordneten Sprühbogen, der an aufgeständerten Schienen längs des Fahrzeugs verfahrbar ist.

Aus der Praxis sind ferner die üblichen Portalwaschanlagen mit einem Einzelportal bekannt, an dem alle Funktionen vereinigt sind und auch die Sprüheinrichtung untergebracht ist. Der Auftrag des flüssigen oder schaumförmigen Reinigungsmittels erfolgt dabei während der mechanischen Fahrzeugwäsche unmittelbar am Waschbereich. Hierdurch gibt es keine relevante Einwirkzeit.

Es ist Aufgabe der vorliegenden Erfindung, eine hinsichtlich des Sprühauftrags verbesserte Fahrzeugwaschanlage aufzuzeigen.

Die Erfindung löst diese Aufgabe mit den Merkmalen im Verfahrens- und Vorrichtungshauptanspruch.
Das Waschverfahren und die Fahrzeugwaschanlage haben den Vorteil, dass sie mit einem geringen Bauaufwand und Platzbedarf auskommen. Es genügt ein einzelnes Waschportal, an dem die Sprüheinrichtung beweglich angebaut werden kann. Der Platzbedarf und insbesondere die benötigte Hallenlänge sind bei einem beweglichen Anbau nicht größer als bei konventionellen Portalwaschanlagen. Das Wachportal kann von beliebiger und insbesondere konventioneller Bauart sein. Zudem lässt sich die Sprüheinrichtung an vorhandenen Portalwaschanlagen nachrüsten oder umrüsten.

Die Sprüheinrichtung ist bevorzugt als Sprühbogen mit mehreren Sprühdüsen ausgebildet, der eine gleichmäßige Benetzung der Ober- und Seitenflächen des Fahrzeugs ermöglicht und eine entsprechend gleichmäßige Reinigungswirkung bietet.

Die um einen Abstand oder Verfahrweg x vor das Waschportal positionierbare Sprüheinrichtung ermöglicht einen Reinigungsmittelauftrag während des Waschprozesses und bei bewegtem Waschportal unter Mitführung der beabstandeten Sprüheinrichtung, wobei sich durch den Verfahrweg x und den entsprechenden Abstand zwischen den Sprühdüsen und der Wascheinrichtung am Waschportal die gewünschte Einwirkzeit am Fahrzeug ergibt. Der Verfahrweg kann veränderlich und einstellbar sein, um die Einwirkzeit zu optimieren und gegebenenfalls an unterschiedliche Reinigungsmittel anzupassen. Eine Anpassung kann außerdem in Abhängigkeit von unterschiedlichen Fahrgeschwindigkeiten des Waschportals erfolgen. Der anfängliche Reinigungsmittelauftrag kann während der Ausfahrbewegung des Sprühbogens bei noch stehendem Waschportal ausgeführt werden, so dass auch in diesem Bereich eine optimale Einwirkzeit bis zum nachfolgenden Start der mechanischen Fahrzeugwäsche und des Waschportals gegeben ist.

Der mit mehreren Sprühdüsen oder anderen geeigneten Abgabeeinheiten ausgerüstete Sprühbogen eignet sich für beliebige und insbesondere flüssige und schaumförmige Reinigungsmittel. Durch die Düsenverteilung ist es möglich, alle relevanten Oberflächenbereiche des Fahrzeugs gleichermaßen gut zu erreichen. Hierfür ist es insbesondere vorteilhaft, wenn der Sprühbogen horizontale und vertikale Sprührohre mit einer entsprechenden Düsenverteilung aufweist. Die Sprüheinrichtung für das Reinigungsmittel lässt sich zudem mit einer Hochdruckwascheinrichtung kombinieren, so dass auch eine Hochdruckwäsche mit zeitlichem und örtlichem Vorlauf vor der Bürstenwäsche durchgeführt werden kann.

In den Unteransprüchen sind weitere vorteilhafte Ausgestaltungen der Erfindung angegeben.

Die Erfindung ist in den Zeichnungen beispielsweise und schematisch dargestellt. Im einzelnen zeigt:
- Figur 1:: eine Fahrzeugwaschanlage mit einem Waschportal und einer ausfahrbaren Sprüheinrichtung in perspektivischer Ansicht,
- Figur 2:: eine Seitenansicht des Waschportals,
- Figur 3:: eine Stirnansicht des Waschportals gemäß Pfeil III von Figur 2 und
- Figur 4:: eine Draufsicht des Waschportals gemäß Pfeil IV von Figur 2.

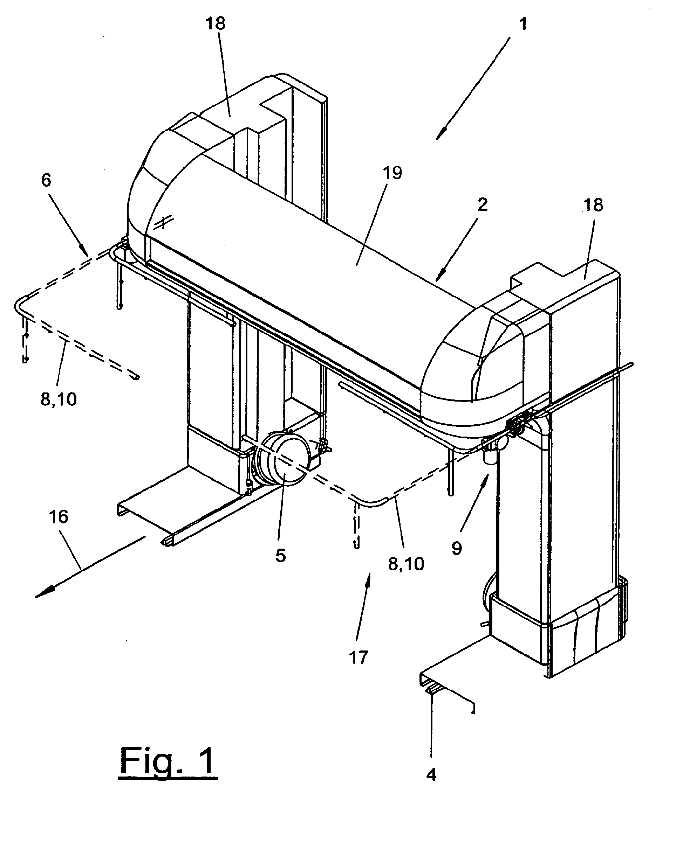

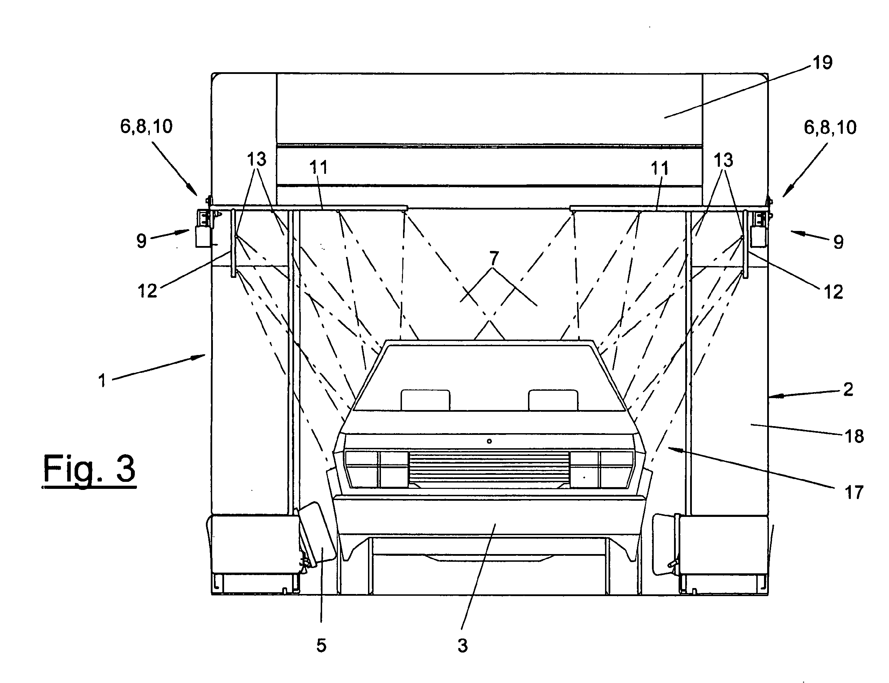

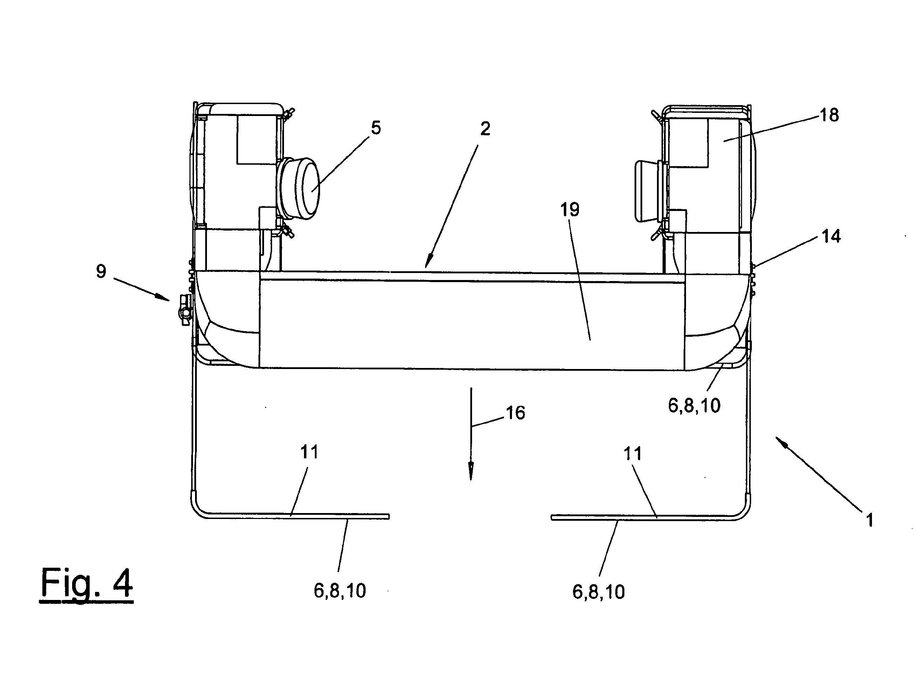

Figur 1 bis 4 zeigen eine Fahrzeugwaschanlage (1) in Form einer Portalwaschanlage, die vorzugsweise ein einziges Waschportal (2) aufweist, welches auf bodenseitigen Schienen (4) in Fahrtrichtung (16) gegenüber einem vor dem Portal (2) positionierten Fahrzeug (3) bewegbar ist. Alternativ kann das Waschportal (2) auch hängend angeordnet sein und bewegt werden.

Das Waschportal (2) besitzt zumindest eine Wascheinrichtung (5), die von beliebiger Art und Ausbildung sein kann, wobei sie z.B. aus ein oder mehreren Waschbürsten mit horizontaler und/oder vertikaler Ausrichtung, Hochdruckwaschdüsen oder dgl. anderen Waschaggregaten besteht, und die in den Zeichnungen durch Radwaschbürsten (5) repräsentiert ist. Das Waschportal (2) kann weitere Behandlungseinrichtungen oder Aggregate aufweisen, die der Übersichtlichkeit halber nicht dargestellt sind. Dies können eine Trockeneinrichtung mit einem heb- und senkbarer Düsenbalken mit Gebläsen, seitliche Luftdüsen mit Gebläsen, ein Mitter, eine Sprüheinrichtungen für Spül- und Konservierungsmittel, eine Poliereinrichtung und dergleichen andere Komponenten sein.

Das Waschportal (2) ist mit einer um einen Abstand x in Portalfahrtrichtung (16) vorstehenden und ausfahrbaren Sprüheinrichtung (6) zum Auftrag eines vorzugsweise flüssigen oder schaumförmigen Reinigungsmittels (7) auf dem Fahrzeug (3) ausgerüstet. Die Sprüheinrichtung (6) kann vor und vor allem während der mechanischen Fahrzeugwäsche aktiviert werden, wobei sie das Reinigungsmittel (7) mit örtlichem und zeitlichem Vorlauf vor der mechanischen Fahrzeugwäsche, z.B. der Hochdruck- oder Bürstenwäsche, auf das Fahrzeug (3) aufträgt. Die Sprüheinrichtung (6) ist mit dem Waschportal (2) verbunden und wird mit diesem mitbewegt.

Wie Figur 1 bis 4 im einzelnen verdeutlichen, besteht die Sprüheinrichtung (6) vorzugsweise aus einem Sprühbogen (8), der mehrere Sprühdüsen (13) für den Auslass des Reinigungsmittels (7) aufweist. Der Sprühbogen (8) ist am Waschportal (2) beweglich gelagert und lässt sich mittels einer Stelleinrichtung (9) in Portalfahrtrichtung (16) um einen begrenzten Verfahrweg x vor und zurück bewegen. In ausgefahrener Stellung wird der Sprühbogen (8) vor das Waschportal (2) bewegt und kann in der ausgefahrenen Endstellung während der mechanischen Fahrzeugwäsche arretiert werden.

Die Sprühdüsen (13) befinden sich in dieser in Figur 1 und in den anderen Zeichnungen gestrichelt dargestellten Ausfahrstellung mit Abstand in Fahrtrichtung (16) vor der Wasch- und Trockeneinrichtung (5). Dieser Abstand umfasst zumindest den Verfahrweg x und gegebenenfalls noch einen zusätzlichen Abstand, den der Sprühbogen (8) in der eingefahrenen Ruhe- oder Ausgangsstellung vor der Wascheinrichtung (5), insbesondere den Dach- und Seitenbürsten und/oder Hochdruckdüsen hat.

Durch diesen Abstand der Sprühdüsen (13) erfolgt der Reinigungsmittelauftrag mit örtlichem und zeitlichem Abstand vor der mechanischen Fahrzeugwäsche. Der vom Reinigungsmittel (7) benetzte Fahrzeugbereich wird von der beabstandeten Wascheinrichtung (5) erst mit zeitlicher Verzögerung erreicht. Hierdurch hat das aufgetragene Reinigungsmittel (7) genügend Zeit zum Einwirken und zum Anlösen der Schmutzpartikel an der Fahrzeugoberfläche. Die Einwirkzeit kann z.B. bei einer Portalgeschwindigkeit im Waschprozess von ca. 6 m/min und einem Abstand x von ca. 1,20 m ca. 12 sec betragen. Sie kann auf Wunsch verändert werden, indem einerseits der Verfahrweg x verändert und auf unterschiedliche Größen eingestellt wird. Eine weitere Einflussmöglichkeit liegt in der Fahrgeschwindigkeit des Waschportals (2). Wenn dieses bei gegebenen Düsenabstand vor der Wascheinrichtung (5) zum Beispiel schneller läuft, wird die Einwirkzeit entsprechend kürzer. Umgekehrt führt eine niedrigen Portalgeschwindigkeit zu einer längeren Einwirkzeit. Der Verfahrweg x kann andererseits auch anderweitig verändert und insbesondere vergrößert werden, wenn das Waschportal (2) zur Verkürzung der Prozesszeit schneller läuft. Die Einwirkzeit lässt sich durch diese Streckenanpassung bei veränderten Portalgeschwindigkeiten konstant halten.

Das Reinigungsmittel (7) kann von beliebiger Art und Konsistenz sein. Es kann flüssig oder schaumförmig sein. Die Sprühdüsen (13) sind entsprechend ausgebildet und angepasst. Sie verteilen das Reinigungsmittel (7) gleichmäßig auf der zu benetzenden Fahrzeugoberfläche. Der Auftrag kann in der Art eines Versprühens oder Zerstäubens unter Druck bei feiner Tröpfchenbildung geschehen. Der Auftrag kann alternativ als Schaumauftrag oder weitgehend drucklos in der Art eines Gießvorgangs erfolgen, wobei der Mengenauslass durch die Mehrfachanordnung der Sprühdüsen (13) begrenzt ist und gezielt erfolgen kann.

Bei der Fahrzeugwäsche wird zunächst das Fahrzeug (3) vor dem stehenden Waschportal (2) abgestellt. Zu Beginn des Reinigungsmittelauftrags wird zunächst der Sprühbogen (8) bei stehendem Waschportal (2) in Fahrtrichtung (16) um den gewünschten Verfahrweg x ausgefahren. Hierbei ist bereits die Sprühfunktion eingeschaltet, so dass der Auftrag in der Ruhe- oder Ausgangsstellung des Sprühbogens (8) beginnt. Diese Grundposition wird so gewählt, dass hierbei die Front des Fahrzeugs (3) beaufschlagt werden kann. Sobald der Sprühbogen (8) nach dem Verfahrweg x seine Endposition erreicht hat, wird er in dieser Stellung arretiert und der Waschprozess mit der mechanischen Fahrzeugwäsche beginnt. Hierbei beginnt auch das Waschportal (2) sich in Fahrtrichtung (16) zu bewegen. Während des Waschprozesses bleibt die Sprühfunktion eingeschaltet und der Reingigungsmittelauftrag erfolgt mit dem gewünschten örtlichen und seitlichen Vorlauf bzw. Abstand vor der mechanischen Fahrzeugwäsche mit der Wascheinrichtung (5).

Wenn das Fahrzeugheck erreicht ist, was über geeignete Sensoren festgestellt werden kann, die z. B. am Sprühbogen (8) angeordnet sind, stoppt der Reinigungsmittelauftrag bei noch andauernder mechanischer Fahrzeugwäsche und fortgesetzter Portalbewegung. Der Sprühbogen (8) wird dabei wieder in die Ausgangsstellung zurückgefahren. In der in den Zeichnungen mit durchgezogenen Strichen dargestellten Ausgangsstellung befindet er sich im Portalbereich und ragt nicht oder nur unwesentlich über die Portalkontur vor. Die Rückfahrbewegung des Sprühbogens (8) kann in Abstimmung mit der restlichen Fahrbewegung des Waschportals (2) erfolgen, so dass der Sprühbogen (8) am Ende der Portalfahrt vollkommen eingezogen ist. Durch diese Gestaltung wird die benötigte Hallenlänge ausschließlich durch das Waschportal (2) bestimmt und bedarf keiner Verlängerung wegen der Sprüheinrichtung (6).

In der Ausgangsstellung stört der Sprühbogen (8) auch nicht die anderen Funktionen und Komponenten des Waschportals (2).

Der Sprühbogen (8) ist im oberen Portalbereich und zumindest bereichsweise oberhalb des Fahrzeugs (3) angeordnet und erstreckt sich im Wesentlichen quer über die Portalöffnung (17). Der Sprühbogen (8) besitzt mehrere vorzugsweise gleichmäßig bzw. symmetrisch verteilt angeordnete Sprühdüsen (13), die zumindest auf die horizontalen Oberflächen und vorzugsweise auch auf die vertikalen Seitenflächen des Fahrzeugs (3) gerichtet sind. Hierbei sind insbesondere mehrere Sprühdüsen (13) horizontal und quer zur Portalfahrtrichtung (16) über die Fahrzeugbreite verteilt angeordnet. Ferner können mehrere Sprühdüsen (13) vertikal oder schräg untereinander angeordnet sein.

Der Sprühbogen (8) kann als ein geschlossener und über die Portalbreite umlaufender U-förmiger und einteiliger Rohrbogen ausgebildet sein. Alternativ kann er wie in der gezeigten Ausführungsform mehrteilig sein und aus zwei oder mehr Bogensegmenten (10) mit einem Abstand in der Mitte bestehen.

Der Sprühbogen (8) oder die Bogensegmente (10) weisen jeweils mindestens zwei gebogene horizontale Sprührohre (11) auf, die sich oberhalb des Fahrzeugs (3) und längs sowie quer zur Portalfahrtrichtung (16) erstrecken. Die Sprührohre (11) sind in der Draufsicht L-förmig gestaltet und mit ihren freien Rohrenden am Waschportal (2) geführt. Ferner weisen der Sprühbogen (8) bzw. die Bogensegmente (10) beidseits im Randbereich der Portalöffnung (17) jeweils mindestens ein im Wesentlichen vertikales Sprührohr (12) auf, welches vorzugsweise an das horizontale Sprührohr (11) hängend angeschlossen ist und aus diesem gespeist wird. An den Sprührohren (11,12) befinden sich die Sprühdüsen (13) in geeigneter Position und Ausrichtung. Die horizontalen Sprührohre (11) sind an ihrem portalseitigen Ende an Versorgungsschläuche oder dergleichen für die Zuführung des Reinigungsmittels (7) angeschlossen. Die vertikalen Sprührohre (12) haben in der bevorzugten Ausführungsform eine relativ kurze Länge von z. B. 30 bis 50 cm und enden oberhalb des Fahrzeugdachs. Sie können alternativ auch weiter nach unten bis in den Rad- oder Schwellerbereich des Fahrzeugs (3) reichen.

Der Sprühbogen (8) bzw. die Bogensegmente (10) werden durch eine Stelleinrichtung (9) bewegt. Diese umfasst zwei im Wesentlichen horizontale Führungen (14) für den Sprühbogen (8) bzw. die Bogensegmente (10), welche sich außenseitig an den Portalständern (18) befinden und in der Höhe knapp unterhalb des Querhaupts (19) des Waschportals (2) positioniert sind. Die Führungen (14) können formschlüssige Gleitführungen für die portalseitigen Endabschnitte der Sprührohre (11) sein, an denen die Rohrenden verdrehfest und axial beweglich geführt sind.

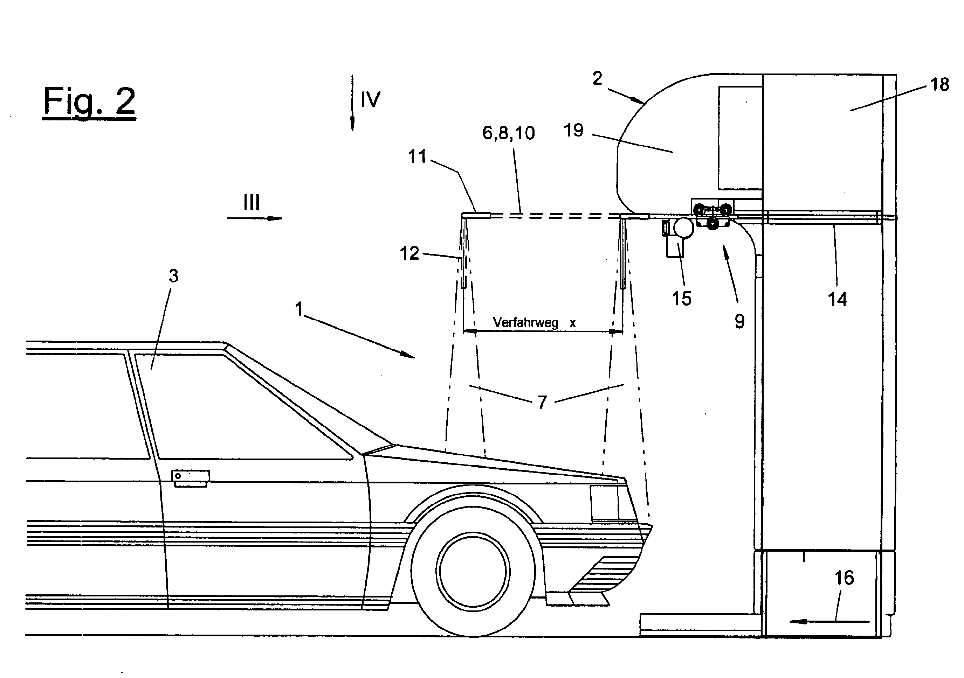

Die Stelleinrichtung (9) umfasst ferner zwei getrennte Antriebe oder einen gemeinsamen steuerbaren Antrieb (15) für den Sprühbogen (8) oder die Bogensegmente (10). Der Antrieb (15) besitzt jeweils einen Elektromotor und eine hiervon betätigte mechanische Vortriebseinrichtung, z.B. einen Reibrollenantrieb für die Sprührohre (11). Figur 2 zeigt diese Anordnung mit drei im Dreieck verteilten Reibrollen in der Seitenansicht. Der Antrieb (15) ist an die Steuerung des Waschportals (2) bzw. der Fahrzeugwaschanlage (1) angeschlossen und wird in Abhängigkeit vom gewählten Waschprozess betätigt.

Der Sprühbogen (8) bzw. die Bogensegmente (10) können außer dem Reinigungsmittelauftrag weitere Funktionen erfüllen, z.B. eine Hochdruckwäsche. Hierfür können die vorhandenen Sprührohre (11,12) mit ihren Sprühdüsen (13) verwendet werden, die dann zufuhrseitig entsprechend umgeschaltet und mit einer Versorgung für Waschwasser verbunden werden. Alternativ können separate und zusätzliche Sprühdüsen für die Hochdruckwäsche vorhanden sein, die an zusätzliche Sprührohre oder Schläuche angeschlossen sind. Über die vorhandene Sprüheinrichtung (6) oder eine entsprechend modifizierte und ergänzte Sprüheinrichtung können auch andere Medien aufgebracht werden, z.B. Spülwasser mit einer Trockenhilfe, Konservierungsmittel oder dergleichen. Der Auftrag kann mit ein- oder ausgefahrener Sprüheinrichtung (6) erfolgen, wobei insbesondere bei Konservierungsmitteln ein zeitlicher Vorlauf vor der nachfolgenden Trocknung in ähnlicher Weise von Vorteil sein kann, wie die vorbeschriebene Einwirkzeit beim Reinigungsmittelauftrag.

Abwandlungen der gezeigten Ausführungsform sind in verschiedener Weise möglich. Der Sprühbogen (8) muss keine gebogene Form und auch keine geschlossene Form haben. Er kann ferner an anderer Stelle gelagert und auch auf andere Weise betätigt werden. Z.B. kann die Sprüheinrichtung (6) aus mehreren einzelnen oder in kleinen Gruppen angeordneten und entsprechend separat zugestellten Sprühdüsen (13) bestehen, die an Schläuche oder dergleichen Versorgungsleitungen angeschlossen sind. Diese Sprühdüsen können in einer Bogenform oder einer beliebigen anderen räumlichen Verteilungsform angeordnet sein. Diese Komponenten können ferner an anderen Stellen des Waschportals (2) gelagert sein, z.B. am Querhaupt (19).

Außer der gezeigten Schiebelagerung ist eine Schwenklagerung möglich, die sich beispielsweise beidseits außen am Querhaupt (19) befindet, wobei der Sprühbogen (8) oder die Bogensegmente (10) aus der gezeigten und horizontal nach vorn ragenden Arbeitsstellung in eine vertikale Ruhe- oder Ausgangsstellung über dem Querhaupt (19) geklappt werden. Außerdem kann die Stelleinrichtung (9) zusätzliche Freiheitsgrade und Bewegungsachsen haben, indem z.B. eine Hebe- und Senkbewegung und/oder eine Seitenbewegung ausgeführt wird, mit der beim Überfahren des Fahrzeugs (3) eine gesteuerte Verfolgung der Fahrzeugkontur(en) über eine entsprechende Sensorik möglich ist. Hierbei kann z.B. der Seitenabstand der seitlichen Sprühdüsen (13) an die Fahrzeugbreite angepasst werden.

Abwandelbar sind ferner die konstruktiven Ausgestaltungen der Komponenten der Stelleinrichtung (9), insbesondere des Antriebs (15) und der Führung (14). In weiterer Abwandlung kann auf die vertikalen Sprührohre (12) und die übereinander angeordneten Sprühdüsen (13) verzichtet werden. In einer weiteren Variante beginnt der Reinigungsmittelauftrag beim Start der Portalfahrt, wobei die Wascheinrichtung ggf. verzögert und erst bei Erreichen der Fahrzeugfront eingeschaltet wird. Am Fahrzeugheck endet der Reinigungsmittelauftrag, wobei das weiterfahrende Waschportal (2) noch die restliche mechanische Fahrzeugwäsche ausführt. Grundsätzlich kann auch die konstruktive Ausgestaltung des Waschportals (2) und seiner sonstigen Komponenten beliebig abgewandelt sein. Die Waschanlage kann ferner eine Mehrfachportalanlage mit einem Waschportal, einem getrennten Trockenportal oder dgl. anderen Portalen sein. Zudem kann ein stationäres oder begrenzt mitfahrendes Waschportal (2) Bestandteil einer Autowaschstrasse sein, wobei die Sprüheinrichtung (6) um den Abstand x gegen die Schlepprichtung der Fahrzeuge vorsteht.

### BEZUGSZEICHENLISTE

- 1: Fahrzeugwaschanlage
- 2: Waschportal
- 3: Fahrzeug
- 4: Schiene
- 5: Wasch- und Trockeneinrichtung
- 6: Sprüheinrichtung
- 7: Reinigungsmittel, Sprühstrahl
- 8: Sprühbogen
- 9: Stelleinrichtung
- 10: Bogensegment
- 11: Sprührohr horizontal
- 12: Sprührohr vertikal
- 13: Sprühdüse
- 14: Führung
- 15: Antrieb
- 16: Portalfahrtrichtung
- 17: Portalöffnung
- 18: Ständer Waschportal
- 19: Querhaupt Waschportal

- x: Abstand, Verfahrweg Sprühbogen

## Patentansprüche

1. Verfahren zum Waschen von Fahrzeugen in einer Fahrzeugwaschanlage (1) mit einem beweglichen Waschportal (2), welches eine Wascheinrichtung (5) für eine mechanischen Fahrzeugwäsche und eine mit einem räumlichen Abstand vor dem Waschportal (2) positionierbare ausfahrbare Sprüheinrichtung (6) für ein flüssiges oder schaumförmiges Reinigungsmittel (7) aufweist, wobei das Reinigungsmittel (7) mit zeitlichem Vorlauf und mit einer Einwirkzeit vor der mechanischen Fahrzeugwäsche auf das Fahrzeug (3) aufgetragen wird, **dadurch**
**gekennzeichnet, dass** das Reinigungsmittel (7) von dem während der mechanischen Fahrzeugwäsche relativ zum Fahrzeug (3) bewegten Waschportal (2) aus mittels der mitgeführten Sprüheinrichtung (6) aufgetragen wird, wobei die Sprüheinrichtung (6) um einen Verfahrweg (x) vor dem Waschportal (2) positioniert wird, wobei sich durch den Verfahrweg (x) und den entsprechenden Abstand zwischen der Sprüheinrichtung (6) und der Wascheinrichtung (5) die gewünschte Einwirkzeit am Fahrzeug ergibt.

2. Verfahren nach Anspruch 1, **dadurch**
**gekennzeichnet, dass** das Reinigungsmittel (7) mittels mehrerer räumlich im Bogen verteilter Sprühdüsen (13) gleichmäßig auf die Ober- und die Seitenflächen des Fahrzeugs (3) im Sprüh- oder Schaumauftrag aufgebracht wird.

3. Verfahren nach Anspruch 1 oder 2, **dadurch**
**gekennzeichnet, dass** die Sprüheinrichtung (6) vor der mechanischen Fahrzeugwäsche ausgefahren und nach dem Reinigungsmittelauftrag wieder eingefahren wird.

4. Verfahren nach Anspruch 1, 2 oder 3, **dadurch**
**gekennzeichnet, dass** der anfängliche Reinigungsmittelauftrag während der Ausfahrbewegung der Sprüheinrichtung (6) bei noch stehendem Waschportal (2) ausgeführt wird.

5. Verfahren nach Anspruch 1, 2, 3 oder 4, **dadurch**
**gekennzeichnet, dass** der Verfahrweg x veränderlich ist und zur Anpassung der Einwirkzeit an unterschiedliche Reinigungsmittel eingestellt wird.

6. Verfahren nach Anspruch 1, 2, 3 oder 4, **dadurch**
**gekennzeichnet, dass** der Verfahrweg x veränderlich ist und zur Anpassung der Einwirkzeit an unterschiedliche Fahrgeschwindigkeiten des Waschportals (2) eingestellt wird.

7. Fahrzeugwaschanlage, bestehend aus einem beweglichen Waschportal (2) mit einer Wascheinrichtung (5) für eine mechanischen Fahrzeugwäsche und einer ausfahrbaren Sprüheinrichtung (6) zum Auftrag eines Reinigungsmittels (7) auf dem Fahrzeug (3), **dadurch**
**gekennzeichnet, dass** die Sprüheinrichtung (6) während der mechanischen Fahrzeugwäsche und der Relativbewegung zwischen Waschportal (2) und Fahrzeug (3) aktivierbar ist, wobei sie mittels einer Stelleinrichtung (9) in Portalfahrtrichtung (16) um einen begrenzten Verfahrweg x vor das Waschportal (2) bewegbar und in der ausgefahrenen Endstellung während der mechanischen Fahrzeugwäsche arretierbar ist, wobei sich durch den Verfahrweg x und den entsprechenden Abstand zwischen der Sprüheinrichtung (6) und der Wascheinrichtung (5) die gewünschte Einwirkzeit am Fahrzeug ergibt.

8. Fahrzeugwaschanlage nach Anspruch 7, **dadurch**
**gekennzeichnet, dass** die Sprüheinrichtung (6) mindestens einen Sprühbogen (8) mit mehreren Sprühdüsen (13) aufweist.

9. Fahrzeugwaschanlage nach Anspruch 7 oder 8, **dadurch**
**gekennzeichnet, dass** die Sprüheinrichtung (6) vor der mechanischen Fahrzeugwäsche bei stehendem Waschportal (2) mit eingeschalteter Sprühfunktion ausfahrbar ist.

10. Fahrzeugwaschanlage nach Anspruch 7, 8 oder 9,
**dadurch gekennzeichnet, dass** die Sprüheinrichtung (6) nach Überfahren des rückwärtigen Fahrzeugendes oder bei Beendigung der Portalfahrt unter Abschalten der Sprühfunktion wieder einfahrbar ist.

11. Fahrzeugwaschanlage nach einem der Ansprüche 7 bis 10, **dadurch gekennzeichnet, dass** der Verfahrweg x ca. 0,5 bis 1,5 m beträgt.

12. Fahrzeugwaschanlage einem der Ansprüche 7 bis 11, **dadurch gekennzeichnet, dass** der Verfahrweg x veränderlich und einstellbar ist.

13. Fahrzeugwaschanlage nach einem der Ansprüche 7 bis 12, **dadurch gekennzeichnet, dass** der Verfahrweg x an die Fahrgeschwindigkeit des Waschportals (2) und an die Einwirkzeit des Reinigungsmittels (7) auf dem Fahrzeug (3) angepasst ist.

14. Fahrzeugwaschanlage einem der Ansprüche 7 bis 13, **dadurch gekennzeichnet, dass** die Sprüheinrichtung (6) im oberen Portalbereich angeordnet ist und sich im wesentlichen quer über die Portalöffnung (17) erstreckt.

15. Fahrzeugwaschanlage einem der Ansprüche 7 bis 14, **dadurch gekennzeichnet, dass** die Sprüheinrichtung (6) mehrere verteilt angeordnete Sprühdüsen (13) aufweist, die auf die horizontalen Oberflächen und die vertikalen Seitenflächen des Fahrzeugs (3) gerichtet sind.

16. Fahrzeugwaschanlage einem der Ansprüche 7 bis 15, **dadurch gekennzeichnet, dass** mehrere Sprühdüsen (13) für ein flüssiges oder schaumförmiges Reinigungsmittel (7) vorgesehen und horizontal und quer zur Portalfahrtrichtung (16) über die Fahrzeugbreite verteilt angeordnet sind.

17. Fahrzeugwaschanlage nach einem der Ansprüche 8 bis 16, **dadurch gekennzeichnet, dass** der Sprühbogen (8) mindestens ein gebogenes Sprührohr (11) aufweist, das sich im wesentlichen horizontal über das Fahrzeug (3) und längs sowie quer zur Portalfahrtrichtung (16) erstreckt, wobei der Sprühbogen (8) beidseits im Randbereich der Portalöffnung (17) jeweils mindestens ein im wesentlichen vertikales Sprührohr (12) aufweist.

18. Fahrzeugwaschanlage nach einem der Ansprüche 7 bis 17, **dadurch gekennzeichnet, dass** die Stelleinrichtung (9) mindestens eine in Fahrtrichtung (16) sich erstreckende Führung (14) an einem Ständer (18) des Waschportals (2) für die Sprüheinrichtung (6) aufweist.

19. Fahrzeugwaschanlage nach einem der Ansprüche 7 bis 18, **dadurch gekennzeichnet, dass** die Stelleinrichtung (9) einen steuerbaren Antrieb (15) für die Sprüheinrichtung (6) aufweist.

20. Fahrzeugwaschanlage nach einem der Ansprüche 7 bis 19, **dadurch gekennzeichnet, dass** die Sprüheinrichtung (6) Sprühdüsen für andere Flüssigkeiten, insbesondere Hochdruckdüsen für Waschwasser, aufweist.

## Claims

1. Method for washing vehicles in a vehicle washing installation (1) having a movable washing gantry (2) which has a washing device (5) for mechanical vehicle wash and an extendable spray device (6), positionable at a spatial distance in front of the washing gantry (2) for liquid or foam-like cleaning agent (7), the cleaning agent (7) being applied to the vehicle (3) with a time advance and with a time of action prior to the mechanical vehicle wash, **characterized in that** the cleaning agent (7) is applied, from the washing gantry (2) moved in relation to the vehicle (3) during the mechanical vehicle wash, by means of the carried-along spray device (6), the spray device (6) being positioned by the amount of a travel (x) in front of the washing gantry (2), the desired time of action at the vehicle being obtained from the travel (x) and the corresponding distance between the spray device (6) and the washing device (5).

2. Method according to Claim 1, **characterized in that** the cleaning agent (7) is applied, by means of a plurality of spray nozzles (13) distributed spatially in an arc, uniformly to the upper faces and side faces of the vehicle (3) by spray or foam application.

3. Method according to Claim 1 or 2, **characterized in that** the spray device (6) is extended prior to the mechanical vehicle wash and is retracted again after the application of the cleaning agent.

4. Method according to Claim 1, 2 or 3, **characterized in that** the initial application of the cleaning agent is carried out during the extension movement of the spray device (6) while the washing gantry (2) is still stationary.

5. Method according to Claim 1, 2, 3 or 4, **characterized in that** the travel (x) is variable and is set for the purpose of adapting the time of action to different cleaning agents.

6. Method according to Claim 1, 2, 3 or 4, **characterized in that** the travel (x) is variable and is set for the purpose of adapting the time of action to different travelling speeds of the washing gantry (2).

7. Vehicle washing installation, consisting of a movable washing gantry (2) with a washing device (5) for a mechanical vehicle wash and of an extendable spray device (6) for applying a cleaning agent (7) to the vehicle (3), **characterized in that** the spray device (6) can be activated during the mechanical vehicle wash and the relative movement between the washing gantry (2) and vehicle (3), the said spray device being movable by means of an actuating device (9) in the gantry travelling direction (16) by the amount of a limited travel (x) in front of the washing gantry (2) and can be locked in the extended end position during the mechanical vehicle wash, the desired time of action at the vehicle being obtained from the travel (x) and the corresponding distance between the spray device (6) and the washing device (5).

8. Vehicle washing installation according to Claim 7, **characterized in that** the spray device (6) has at least one spray arc (8) with a plurality of spray nozzles (13).

9. Vehicle washing installation according to Claim 7 or 8, **characterized in that** the spray device (6) can be extended with a switched-on spray function prior to the mechanical vehicle wash, with the washing gantry (2) stationary.

10. Vehicle washing installation according to Claim 7, 8 or 9, **characterized in that** the spray device (6), after running over the rear vehicle end or when the gantry excursion has ended, can be retracted again, with the spray function being switched off.

11. Vehicle washing installation according to one of Claims 7 to 10, **characterized in that** the travel (x) amounts to approximately 0.5 to 1.5 m.

12. Vehicle washing installation according to one of Claims 7 to 11, **characterized in that** the travel (x) is variable and can be set.

13. Vehicle washing installation according to one of Claims 7 to 12, **characterized in that** the travel (x) is adapted to the travelling speed of the washing gantry (2) and to the time of action of the cleaning agent (7) on the vehicle (3).

14. Vehicle washing installation according to one of Claims 7 to 13, **characterized in that** the spray device (6) is arranged in the upper gantry region and extends essentially transversely over the gantry aperture (17).

15. Vehicle washing installation according to one of Claims 7 to 14, **characterized in that** the spray device (6) has a plurality of spray nozzles (13) which are arranged in a distributed manner and which are directed onto the horizontal upper faces and vertical side faces of the vehicle (3).

16. Vehicle washing installation according to one of Claims 7 to 15, **characterized in that** a plurality of spray nozzles (13) for a liquid or foam-like cleaning agent (7) are provided and are arranged horizontally and transversely to the gantry travelling direction (16) so as to be distributed over the vehicle width.

17. Vehicle washing installation according to one of Claims 8 to 16, **characterized in that** the spray arc (8) has at least one curved spray pipe (11) which extends essentially horizontally over the vehicle (3) in the longitudinal direction and transversely to the gantry travelling direction (16), the spray arc (8) having on each of the two sides, in the marginal region of the gantry aperture (17), at least one essentially vertical spray pipe (12).

18. Vehicle washing installation according to one of Claims 7 to 17, **characterized in that** the actuating device (9) has at least one guide (14), extending in the travelling direction (16), on a column (18) of the washing gantry (2) for the spray device (6).

19. Vehicle washing installation according to one of Claims 7 to 18, **characterized in that** the actuating device (9) has a controllable drive (15) for the spray device (6).

20. Vehicle washing installation according to one of Claims 7 to 19, **characterized in that** the spray device (6) has spray nozzles for other liquids, in particular high-pressure nozzles for washing water.

## Revendications

1. Procédé de lavage de véhicules dans une installation de lavage de véhicules (1) avec un portique de lavage mobile (2), qui présente un dispositif de lavage (5) pour un lavage mécanique du véhicule et un dispositif de pulvérisation extensible (6) pouvant être positionné à une distance spatiale avant le portique de lavage (2) pour un agent de nettoyage liquide ou mousseux (7), dans lequel l'agent de nettoyage (7) est appliqué sur le véhicule (3) avec une avance de temps et un temps d'action avant le lavage mécanique du véhicule, **caractérisé en ce que** l'agent de nettoyage (7) est appliqué à partir du portique de lavage (2) déplacé par rapport au véhicule (3) pendant le lavage mécanique du véhicule au moyen du dispositif de pulvérisation entraîné (6), dans lequel le dispositif de pulvérisation (6) est positionné à un espacement (x) avant le portique de lavage (2), dans lequel le temps d'action souhaité sur le véhicule résulte de l'espacement (x) et de la distance correspondante entre le dispositif de pulvérisation (6) et le dispositif de lavage (5).

2. Procédé selon la revendication 1, **caractérisé en ce que** l'agent de nettoyage (7) est appliqué uniformément sur la face supérieure et les faces latérales du véhicule (3) par un dépôt de pulvérisation ou de mousse au moyen de plusieurs buses de pulvérisation (13) réparties spatialement dans l'arcade.

3. Procédé selon la revendication 1 ou 2, **caractérisé en ce que** le dispositif de pulvérisation (6) est étendu avant le lavage mécanique du véhicule et est de nouveau rentré après le dépôt de l'agent de nettoyage.

4. Procédé selon la revendication 1, 2 ou 3, **caractérisé en ce que** le dépôt initial d'agent de nettoyage est effectué pendant le mouvement d'extension du dispositif de pulvérisation (6) alors que le portique de lavage (2) est encore à l'arrêt.

5. Procédé selon la revendication 1, 2, 3 ou 4, **caractérisé en ce que** l'espacement x est variable et est réglé en vue de l'adaptation du temps d'action à différents agents de nettoyage.

6. Procédé selon la revendication 1, 2, 3 ou 4, **caractérisé en ce que** l'espacement x est variable et est réglé en vue de l'adaptation du temps d'action à différentes vitesses de déplacement du portique de lavage (2).

7. Installation de lavage de véhicules, composée d'un portique de lavage mobile (2) avec un dispositif de lavage (5) pour un lavage mécanique des véhicules et un dispositif de pulvérisation extensible (6) pour déposer un agent de nettoyage (7) sur le véhicule (3), **caractérisée en ce que** le dispositif de pulvérisation (6) peut être activé pendant le lavage mécanique du véhicule et le mouvement relatif entre le portique de lavage (2) et le véhicule (3), dans laquelle il peut être déplacé d'un espacement limité x avant le portique de lavage (2) dans la direction de déplacement (16) du portique au moyen d'un dispositif de réglage (9) et il peut être bloqué dans la position finale étendue pendant le lavage mécanique du véhicule, dans laquelle le temps d'action souhaité sur le véhicule résulte de l'espacement x et de la distance correspondante entre le dispositif de pulvérisation (6) et le dispositif de lavage (5).

8. Installation de lavage de véhicules selon la revendication 7, **caractérisée en ce que** le dispositif de pulvérisation (6) présente au moins une arcade de pulvérisation (8) avec plusieurs buses de pulvérisation (13).

9. Installation de lavage de véhicules selon la revendication 7 ou 8, **caractérisée en ce que** le dispositif de pulvérisation (6) est extensible avec la fonction de pulvérisation enclenchée avant le lavage mécanique du véhicule avec le portique de lavage (2) à l'arrêt.

10. Installation de lavage de véhicules selon la revendication 7, 8 ou 9, **caractérisée en ce que** le dispositif de pulvérisation (6) peut de nouveau être rentré avec coupure de la fonction de pulvérisation après franchissement de l'extrémité arrière du véhicule ou à la fin du déplacement du portique.

11. Installation de lavage de véhicules selon l'une quelconque des revendications 7 à 10, **caractérisée en ce que** l'espacement x vaut environ 0,5 à 1,5 m.

12. Installation de lavage de véhicules selon l'une quelconque des revendications 7 à 11, **caractérisée en ce que** l'espacement x est variable et réglable.

13. Installation de lavage de véhicules selon l'une quelconque des revendications 7 à 12, **caractérisée en ce que** l'espacement x est adapté à la vitesse de déplacement du portique de lavage (2) et au temps d'action de l'agent de nettoyage (7) sur le véhicule (3).

14. Installation de lavage de véhicules selon l'une quelconque des revendications 7 à 13, **caractérisée en ce que** le dispositif de pulvérisation (6) est disposé dans la région supérieure du portique et s'étend essentiellement transversalement au-dessus de l'ouverture du portique (17).

15. Installation de lavage de véhicules selon l'une quelconque des revendications 7 à 14, **caractérisée en ce que** le dispositif de pulvérisation (6) présente plusieurs buses de pulvérisation (13) disposées de façon répartie, qui sont dirigées vers les surfaces horizontales et vers les faces latérales verticales du véhicule (3).

16. Installation de lavage de véhicules selon l'une quelconque des revendications 7 à 15, **caractérisée en ce qu'**il est prévu plusieurs buses de pulvérisation (13) pour un agent de nettoyage (7) liquide ou mousseux et elles sont disposées de façon répartie sur la largeur du véhicule, horizontalement et transversalement à la direction de déplacement (16) du portique.

17. Installation de lavage de véhicules selon l'une quelconque des revendications 8 à 16, **caractérisée en ce que** l'arcade de pulvérisation (8) comporte au moins un tube de pulvérisation courbé (11), qui s'étend essentiellement horizontalement au-dessus du véhicule (3) et longitudinalement ainsi que transversalement à la direction de déplacement (16) du portique, dans laquelle l'arcade de pulvérisation (8) présente de part et d'autre, dans la région de bord de l'ouverture du portique (17), chaque fois au moins un tube de pulvérisation essentiellement vertical (12).

18. Installation de lavage de véhicules selon l'une quelconque des revendications 7 à 17, **caractérisée en ce que** le dispositif de réglage (9) présente au moins un guide (14) s'étendant dans la direction de déplacement (16) sur un montant (18) du portique de lavage (2) pour le dispositif de pulvérisation (6).

19. Installation de lavage de véhicules selon l'une quelconque des revendications 7 à 18, **caractérisée en ce que** le dispositif de réglage (9) comporte un entraînement réglable (15) pour le dispositif de pulvérisation (6).

20. Installation de lavage de véhicules selon l'une quelconque des revendications 7 à 19, **caractérisée en ce que** le dispositif de pulvérisation (6) présente des buses de pulvérisation pour d'autres liquides, en particulier des buses à haute pression pour l'eau de lavage.
